## Europäisches Patentamt
## European Patent Office
## Office européen des brevets

(19)

(11) Publication number: **0 153 801**
**B1**

(12) # EUROPEAN PATENT SPECIFICATION

(45) Date of publication of patent specification: **13.01.88**

(51) Int. Cl.⁴: **C 03 B 9/38**

(21) Application number: **85300385.3**

(22) Date of filing: **21.01.85**

(54) **Cooling arrangement for a mould of a glassware forming machine of the individual section type.**

(30) Priority: **25.01.84 GB 8401923**

(43) Date of publication of application:
**04.09.85 Bulletin 85/36**

(45) Publication of the grant of the patent:
**13.01.88 Bulletin 88/02**

(84) Designated Contracting States:
**DE FR IT**

(56) References cited:
**EP-A-0 102 820**
**EP-A-0 118 288**
**DE-C-3 040 310**
**DE-C-3 123 488**
**US-A-4 251 253**
**Soviet Inventions Illustrated, Derwent**
**Publications Ltd. Week D39, 4 November 1981**
**Abstract no. 71405, L01 & SU-A-794020**
**(GLASS EQUIP) 21-08-1978**
**Glastechnische Berichte" 53 Jahrgang (1980),**
**p. 306,307**
**ro ro ro Technik Lexikon, Maschinenbau**
**Grundlagen", Band 1. 1971, p. 90**

(73) Proprietor: **EMHART INDUSTRIES, INC.**
**426 Colt Highway**
**Farmington Connecticut 06032 (US)**

(72) Inventor: **Jones, Stanley Peter Strafford House**
**Bride Church Lane**
**Tickhill Nr. Doncaster (GB)**

(74) Representative: **Drury, Peter Lawrence et al**
**Emhart Patents Department**
**Lyn House 39 The Parade**
**Oadby, Leicester LE2 5BB (GB)**

Courier Press, Leamington Spa, England.

## Description

This invention is concerned with a mould arrangement of a glassware forming machine of the individual section type, the arrangement comprising air blowing means, ducting and/or piping arranged to conduct air blown by the air blowing means to a plenum chamber of the arrangement, the plenum chamber communicating, when the mould is closed, with entrances of cooling passages of the arrangement formed in at least one portion of the mould, each cooling passage extending substantially in a straight line between its entrance and an exit thereof to atmosphere.

In a glass container manufacturing machine of the so-called "individual section" type, a number of container making units or sections are arranged side by side, are fed with glass from a common source, and feed their output to a common conveyor. Each of these sections has at least one parison mould in which a parison is formed from a gob of molten glass delivered to the mould, and at least one blow mould in which parisons are blown to the shape of the container. Since the moulds of an individual section type machine absorb heat from the glass at a rate which is faster than the heat can be dissipated to the surrounding atmosphere without additional cooling, such moulds are supplied with cooling means which cool the mould so that it remains at a substantially constant average temperature during successive operations of the machine.

In the specification of European Patent Application EP—A2—0102820, published on 04.09.1985 and thus falling within the terms of Article 54(3) EPC, there is described a mould arrangement of the kind specified in the first paragraph, in which the disadvantages of conventional cooling means for moulds are overcome. In this mould arrangement, the mould has cooling passages in side portions thereof which each have an entrance in a bottom surface of that side portion and a plenum chamber extends beneath the side portions and has one or more exits which open upwardly and communicate, when the side portions are above the plenum chamber, either directly or through vertical passages in the bottom plate with the entrances of the cooling passages so that air is supplied to each cooling passage at substantially the same pressure (which is up to 13.7 Kpa [1400 mm of water]).

The above-described mould arrangement allows air to reach the entrance of each cooling passage at substantially the same pressure, this being ensured by the plenum chamber. The term "plenum chamber" where used herein refers to a chamber whose exit or exits are sufficiently remote from its entrance and its volume is sufficiently large that a substantially uniform pressure is created across the exit or exits of the chamber. Furthermore, the straight flow paths for the cooling air in the mould of the mould arrangement reduces non-uniform air flow therein to a minimum. Accordingly, it is possible to predict accurately the cooling effect of each passage and the distribution of cooling around the mould cavity can be controlled by positioning the passages as determined by mathematical models constructed to obtain an optimum cooling distribution.

It is an object of the present invention to provide a cooling arrangement for a mould of a glassware forming machine of the individual section type in which mould arrangements as described above incorporating a plenum chamber can be used efficiently so that savings in energy consumption are achieved.

The invention provides a cooling arrangement for a mould of a glassware forming machine of the individual section type, the arrangement comprising air blowing means, ducting and/or piping arranged to conduct air blown by the air blowing means to a plenum chamber of the arrangement, the plenum chamber communicating, when the mould is closed, with entrances of cooling passages of the arrangement formed in at least one portion of the mould, each cooling passage extending substantially in a straight line between its entrance and an exit thereof to atmosphere, wherein the air blowing means is arranged to create an air pressure of between 1100 and 200 mm of water at the entrances of the cooling passages, and the ducting and/or piping and the plenum chambers are arranged to provide less resistance to the passage of air therethrough than the combined resistance of the cooling passages.

In a cooling arrangement according to the last preceding paragraph, as the air has a straight line flow path through the cooling passages, the resistance to flow is not great and the design of the ducting and/or piping to have even less resistance enables the relatively low pressures in the range between 1100 and 200 mm of water to be utilised while still obtaining sufficient air flow to provide adequate cooling. The exact pressure required depends on the working conditions such as, the size of the mould, the size and number of cooling passages, and the speed of the machine, but substantially all working conditions can be accommodated in the stated pressure range. Since this pressure range is considerably lower than that used in previous cooling arrangements using cooling passages, smaller fans can be used as the air blowing means of the arrangement or, alternatively, large fans can be run at a lower speed. Indeed, it is possible to use fans of the type conventionally used to blow air on to the outside of moulds. Both these situations result in a saving in the energy required to drive the fan. Furthermore, there is less noise generated by the air than if conventional pressures are used.

While the range of air pressures between 1100 and 200 mm of water gives considerable energy savings over previous methods involving cooling passages, the range between 800 and 200 mm of water is preferred when this can be achieved.

It is advantageous to reduce the total resistance to air flow of the cooling arrangement to enable lower air pressures in the stated range to be used and therefore result in greater energy savings, in order to achieve this, the ducting and/or piping and the plenum chamber may be arranged to provide less than 30 percent of the total resistance to air flow provided between the air blowing means and the exits of the cooling passages.

In order to reduce the resistance to air flow created at the exits of the plenum chamber, the plenum chamber may have a plurality of exits, each exit being arranged to communicate with the entrance of one of the cooling passages, each exit being as substantially the same shape as the entrance with which it communicates but of greater cross-sectional area.

In order to further reduce the resistance to air flow, the upstream edge of each exit of the plenum chamber is radiused to reduce to resistance to air flow and the edge of the entrance of each cooling passage is so radiused. The cooling passages may be circular in transverse-cross section and the edge of the entrance thereof may be radiused to a radius which is equal to at least 0.04 multiplied by the diameter of the cooling passage. Preferably, however, the edges radiused to a radius which is greater than 0.1 multiplied by the diameter of the cooling passage.

In order to further reduce the resistance to air flow, a downstream end portion of each cooling passage may be of larger cross-sectional area than the remainder of the passage. Preferably, the downstream end portion increases in cross-sectional area in the downstream direction.

In order to ensure that the air passing through the cooling passage provides efficient cooling, it is advantageous if the Reynolds Number for the air flowing through the cooling passages is arranged to be greater than 10,000. The Reynolds No. is defined as the velocity of the air multiplied by diameter of the passage divided by the kinematic viscosity of the air, the kinematic viscosity being the dynamic viscosity divided by the density. Since the air is heated in flowing through the cooling passage, the Reynolds Number will vary along the passage. For example, for a passage of 7 mm diameter and 200 mm long with an entrance pressure of 500 mm of water and entrance temperature of 20° centigrade, the Reynolds Number would be between 28,000 and 23,000.

In order to further decrease the resistance to air flow in the cooling arrangement, the cooling passages may be of circular cross-section and at least a majority of the cooling passages have exits which, when the passages are in communication with the plenum chamber, are not obstructed for a distance of at least 10 times the diameter of the cooling passage measured outwardly along the axis of the passage. This ensures that the air leaving the passage does not meet any obstructions for a significant distance.

There now follows a detailed description, to be read with reference to the accompanying drawings, of a cooling arrangement which is illustrative of the invention. It is to be understood that the illustrative cooling arrangement has been selected for description by way of example and not of limitation of the invention.

In the drawings:

Figure 1 is a diagrammatic view showing piping and ducting of the illustrative cooling arrangement; and

Figure 2 is a vertical cross-sectional view taken on the line II—II in Figure 1.

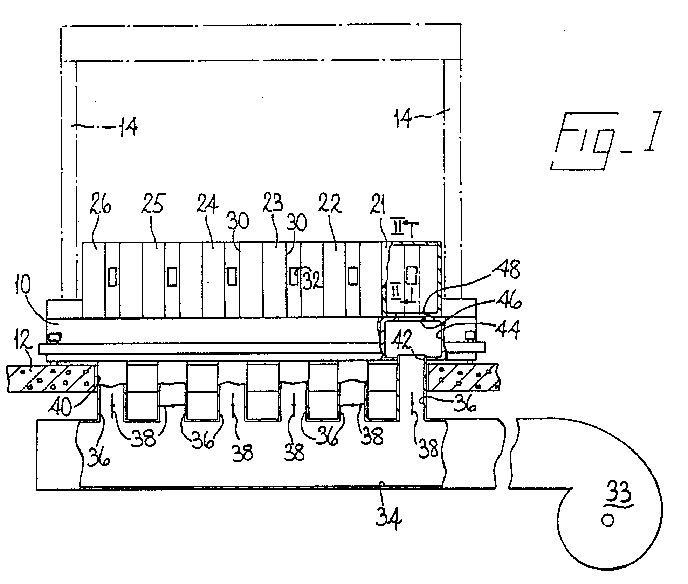

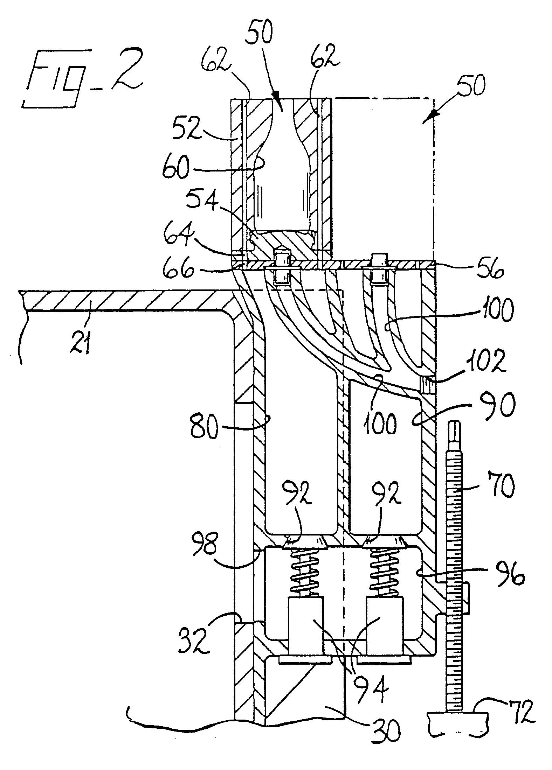

The illustrative cooling arrangement is for a mould of a glassware forming machine of the individual section type. Relevant portions of the individual section type glassware forming machine are shown in Figures 1 and 2 and other portions are omitted in the interests of clarity. The machine comprises a base 10 which rests on a floor 12, two pillars 14 which extend vertically upwards from the base 10 at opposite end portions thereof (the pillars 14 being indicated in broken line in Figure 1), and six section frames 21—26 mounted side by side on top of the base 10. Each section frame 21—26 supports various mechanisms of the individual section type glassware forming machine (these mechanisms not being shown in the drawings). There are also mechanisms (also not shown in the drawings) contained within the section frames 21—26. Each section frame forms a rectangular box having a vertically-extending recess 30 in one end thereof. A rectangular opening 32 leads into the section frame 21—26 from the recess 30.

In a cellar beneath the floor 12, the illustrative cooling arrangement comprises air blowing means in the form of a fan 33 which is arranged to blow air into a circular ducting 34 of large diameter. The ducting 34 communicates with six vertically-extending pipes 36, one for each section of the machine. Each of these pipes 36 contains a damper 38 which can be moved between an open position in which it allows air to pass from the ducting 34 along the pipe 36 and a closed position in which it prevents such passage of air. The pipes 36 extend upwardly through an opening 40 in the floor 12 and enter openings 42 in the bottom of the base 10. The base 10 contains enclosed chambers 44, one for each section of the machine, which act as ducting for air passing through the pipe 36. Each chamber 44 has an upwardly opening exit 46 which communicates with an opening 48 in the bottom of one of the section frames 21—26. Thus, the cooling arrangement comprises ducting and/or piping arranged to conduct air blown by the air blowing means to the interior of the section frames 21—26.

Air entering the section frames 21—26 leaves through the openings 32 and enters a bottom plate mechanism of the cooling arrangement shown in Figure 2. It should be noted that the bottom plate mechanisms, there is one for each section, have been omitted from Figure 1 in the interests of clarity. The bottom plate mechanism of each section is mounted in the recess 30 of the section frame 21—26 and is adjustable vertically therein.

The bottom plate mechanism of the illustrative cooling arrangement supports two identical moulds 50 arranged side by side along a longitudinal axis of a section of the machine. Each mould comprises two side portions 52 which are mounted on supporting arms (not shown), which arms are movable by moving means (not shown), in conventional manner, to move the side portions 52 of each mould toward one another into a first, closed, condition thereof (shown in Figure 2) or away from one another into a second, open position thereof to allow moulded articles to be removed from the mould 50. Each mould also comprises a bottom plate 54 which rests on a sealing plate 56 of the mechanism. The bottom plate 54 defines a bottom portion of a cavity 60 of the mould and the two side portions 52 define side portions of the cavity 60. In their first, closed, position the side portions 52 engage the bottom plate 54 and one another to co-operate in defining the mould cavity 60. The side portions 52 also define cooling passages 62 which pass upwardly through the mould side portions 52 extending substantially in a straight line between entrances and exits thereof to atmosphere. The entrances of the passages 62 are formed in a bottom surface of each side portion 52 and the exits thereof are formed in a top surface thereof. When the side portions 52 are in their closed position, the entrances of the passages 62 communicate via passages 64 in the bottom plate 54 with passages 66 in the sealing plate 56.

The sealing plate 56 forms part of the bottom plate mechanism which is mounted for vertical adjustment on the section frame 21—26. Vertical adjustment is achieved by means of a screw 70 threadedly received in the mechanism and bearing on a horizontal surface 72 provided by the bed 10.

The bottom plate mechanism also comprises walls which define a first plenum chamber 80 and a second plenum chamber 90. Each of the plenum chambers 80, 90 extends downwardly in a mechanism beneath one of the moulds 50 so that air supplied to the plenum chamber passing through the passages 66, 64 and 62 and acts to cool the mould 50. At the bottom thereof, each of the plenum chambers 80, 90 has an entrance 92 which can be opened or closed by means of a solenoid-operated valve 94, there being one valve 94 associated with each plenum chamber so that air can be supplied independently to the respective plenum chambers 80 and 90. The entrances 92 communicate with a chamber 96 beneath the plenum chambers 80 and 90. The chamber 96 has an entrance 98 which is arranged to communicate with the opening 32 from the recess 30 into the interior of the section frame 21—26. Thus, air blown into the interior of the section frame 21—26 can pass through the opening 32 into the chamber 96. When the valves 94 are in an open condition, air entering the chamber 96 can pass into the plenum chambers and act to cool the moulds 50. The bottom plate mechanism also comprises passages 100 which are sealed from the plenum chambers 80 and 90 but which lead to the bottom plates 54 so that a vacuum supply can be connected to the bottom plates 54 in conventional manner. The pipes 100 lead to a fitment 102 which can be connected to a vacuum source by means of a flexible pipe.

The valves 94 are in their open condition in which they allow air to enter the chambers 80 and 90 only when the side portions 52 of the moulds 50 are in their closed position which is the period when the passages 62 communicate with the passages 66. However, the valves 94 may be used to allow air to enter the plenum chambers 80 and 90 for less than this period.

Thus, the mould 50 of a glassware forming machine of the individual section type is cooled by a cooling arrangement which comprises a fan 33, ducting and/or piping formed by the ducting 34, the pipes 36, the chamber 44, the chamber within the section frame 21—26, and the chamber 96, the ducting and/or piping being arranged to conduct air blown by the fan 33 to a plenum chamber 80 or 90. Furthermore, the plenum chamber 80 or 90 communicates, during a portion of the cycle of operation of the machine when the mould portions 52 are in their closed position, with entrances of cooling passages 62 of the arrangement formed in the side portions 52 of the mould 50. The air passes along the passages 62 in a substantially straight line between its entrance and its exit and emerges from the exits of the passage 62 into the atmosphere.

In the illustrative cooling arrangement, the dimensions of the aforementioned ducting and/or piping are wherever possible made large to reduce the resistance to air flow therethrough so that the ducting and/or piping and the plenum chamber provide less resistance to the passage of air therethrough than do the cooling passages 62. The fan 33 is operated so that it creates an air pressure of between 1100 and 200 mm of water at the entrances of the cooling passages 62, the particular pressure depending on the working conditions at the time. Under most circumstances the fan 33 can be operated to create an air pressure of between 800 and 200 mm of water at the entrances of said cooling passages 62. Preferably, the ducting and/or piping and the plenum chamber 80 or 90 is arranged to provide less than 30 percent of the total resistance to air flow provided between the air flowing means and the exits of the cooling passages.

In order to prevent manufacturing tolerances causing a step between the exits 66 of the plenum chambers 80 and 90 and the entrances of the cooling passages 62 and thereby increasing the resistance to flow, each exit 66 is made of substantially the same shape as the entrance with which it communicates but is of greater cross-sectional area.

In order to further reduce the resistance of air flow, the upstream edge of each exit 66 is radiused and the edge of the entrance of each cooling passage 62 is also radiused. The cooling passages are circular in transverse cross-section, being produced by a boring operation. It is found that, if the edge of a circular passage is not radiused, the entrance creates a resistance to air flow which is equivalent to the resistance to flow provided by a considerable length of passage. For example, for a passage having a diameter of 5 mm, if the edge is not radiused the entrance produces a resistance to flow equivalent to a 21 mm length of passage. As another example, for a passage diameter of 10 mm an unradiused entrance produces a resistance equivalent to 25 mm of passage length. It is found that this resistance provided by the entrance is effectively halved if the entrance is radiused to a radius which is 0.04 times the diameter of the cooling passage. It is, therefore, advantageous if the edge is radiused to a radius which is equal to at least 0.04 times the diameter of the cooling passage. If, however, the radius is equal to 0.1 times the diameter of the cooling passage, the resistance is reduced to approximately 1/5 of the unradiused resistance. It is, therefore, further advantageous if the edge is radiused to a radius which is greater than 0.1 times the diameter of the cooling passage.

The resistance to air flow of the cooling arrangement can be further reduced if the downstream end portion of each cooling passage 62 is of larger cross-sectional area than the remainder of the passage. This can be achieved by either tapering the passage wall outwardly in the downstream direction or by boring the downstream end portion to a greater diameter. This increase of the cross-sectional area in the downstream direction of the downstream end portion of the cooling passages 62 reduces the cooling effect at the top of the mould 50 but this may be advantageous in many circumstances.

In order to further decrease the resistance to air flow, it is advantageous if the exits of the cooling passages 62 to atmosphere are not obstructed by other parts of the machine. It is found that it is advantageous if the cooling passages are not obstructed, when the passages are in communication with the plenum chambers 80 and 90, for a distance of at least 10 times the diameter of the cooling passage measured outwardly along the axis of the passage exit. This condition may not be achievable for all the cooling passages due to the constraints on the construction of the individual section of glassware forming machine but should be achievable for a majority of the cooling passages. Preferably, where the exit is transverse to the axis of the passage 62, nothing should protrude into a cone having a base at the exit of the cooling passage 62 and co-extensive therewith and an apex located at a distance of 20 times the diameter of the exit outwardly therefrom along the axis.

In variations of the illustrative cooling arrangement, the fan 33 can be located above the floor 42 and be connected by ducts to end portions of the base 10 from which air is ducted in longitudinal ducts formed within the base 10 which communicates with the openings 48. For example, three of the section frames 21—26 may be supplied with air from one end of the base 10 and three be supplied from the other end thereof. Alternatively, longitudinal ducts formed within the base 10 can be supplied from beneath the ends of the base.

**Claims**

1. A cooling arrangement for a mould (50) of a glassware forming machine of the individual section type, the arrangement comprising air blowing means (33), ducting and/or piping (34, 36, 44, 32) arranged to conduct air blown by the air blowing means to a plenum chamber (80, 90) of the arrangement, the plenum chamber communicating, when the mould is closed, with entrances of cooling passages (62) of the arrangement formed in at least one portion of the mould, each cooling passage extending substantially in a straight line between its entrance and an exit thereof to atmosphere, wherein the air blowing means (33) is arranged to create an air pressure of between 1100 and 200 mm of water at the entrances of the cooling passages (62), and the ducting and/or piping (34, 36, 44, 32) and the plenum chamber (80, 90) are arranged to provide less resistance to the passage of air therethrough than the combined resistance of the cooling passages.

2. A cooling arrangement according to claim 1, characterised in that the air blowing means (33) is arranged to create an air pressure of between 800 and 200 millimetres of water at the entrances of the cooling passages (62).

3. A cooling arrangement according to either one of claims 1 and 2, characterised in that the ducting and/or piping (34, 36, 44, 32) and the plenum chamber (80, 90) are arranged to provide less than 30 per cent of the total resistance to air flow provided between the air blowing means (33) and the exits of the cooling passages (62).

4. A cooling arrangement according to any one of claims 1 to 3, characterised in that the plenum chamber (80, 90) has a plurality of exits (66), each exit being arranged to communicate with the entrance of one of the cooling passages (62), each exit being of substantially the same shape as the entrance with which it communicates but of greater cross-sectional area.

5. A cooling arrangement according to claim 4, characterised in that the upstream edge of each exit (66) is radiused to reduce the resistance to air flow.

6. A cooling arrangement according to any one of claims 1 to 5, characterised in that the edge of the entrance of each cooling passage (62) is radiused to reduce the resistance to air flow.

7. A cooling arrangement according to claim 6, characterised in that the cooling passages (62) are circular in transverse cross-section and the edge is radiused to a radius which is equal to at least 0.04 times the diameter of the cooling passage.

8. A cooling arrangement according to claim 6, characterised in that the cooling passages (62) are circular in transverse cross-section and the edge is radiused to a radius which is greater than 0.1 times the diameter of the cooling passage.

9. A cooling arrangement according to any one of claims 1 to 8, characterised in that a downstream end portion of each cooling passage (62) is of larger cross-sectional area than the remainder of the passage.

10. A cooling arrangement according to claim 9, characterised in that the downstream end portion increases in cross-sectional area in the downstream direction.

**Patentansprüche**

1. Anordnung für das Kühlen für eine Form (50) einer Glaswarenformmaschine vom Typ IS mit einer Luftgebläseeinrichtung (33), Leitungen (34, 36, 44, 32), welche die von der Luftgebläseeinrichtung abgegebene Luft in eine Sammelkammer (80, 90) der Anordnung führen, welche bei geschlossener Form mit Einlässen von Kühlkanälen (62) der Anordnung in Verbindung steht, die in mindestens einem Teil der Form ausgebildet sind, wobei sich jeder Kühlkanal im wesentlichen gradlinig von seinem Einlaß zu einem Auslaß zur Atmosphäre erstreckt, wobei die Luftgebläseeinrichtung (33) so angeordnet ist, daß sie an den Einlässen der Kühlkanäle (62) einen Luftdruck zwischen 1100 und 200 mm Wasser schafft, und wobei die Leitungen (34, 36, 44, 32) und die Sammelkammer (80, 90) so angeordnet sind, daß sie auf den Luftdurchgang einen Widerstand ausüben, der geringer als der der Kühlkanäle insgesamt ist.

2. Anordnung nach Anspruch 1, dadurch gekennzeichnet, daß die Luftgebläseeinrichtung (33) so angeordnet ist, daß sie an den Einlässen der Kühlkanäle (62) einen Luftdruck zwischen 800 und 200 mm Wasser erzeugt.

3. Anordnung nach einem der Ansprüche 1 bis 2, dadurch gekennzeichnet, daß die Leitungen (34, 36, 44, 32) und die Sammelkammer (80, 90) so angeordnet sind, daß sie weniger als 30% des gesamten der Luftströmung entgegenwirkenden Widerstands zwischen der Luftgebläseeinrichtung (33) und den Auslässen der Kühlkanäle (62) verursachen.

4. Anordnung nach einem der Ansprüche 1 bis 3, dadurch gekennzeichnet, daß die Sammelkammer (80, 90) eine Vielzahl von Ausgängen (66) aufweist, die jeweils mit dem Einlaß eines der Kühlkanäle (62) verbunden sind, und daß jeder Ausgang im wesentlichen die gleiche Gestalt wie der mit ihm verbundene Einlaß, aber eine größere Querschnittsfläche als dieser hat.

5. Anordnung nach Anspruch 4, dadurch gekennzeichnet, daß der stromaufwärtige Rand eines jeden Ausganges (66) abgerundet ist, um den Luftströmungswiderstand zu verringern.

6. Anordnung nach einem der Ansprüche 1 bis 5, dadurch gekennzeichnet, daß der Rand des Einlasses eines jeden Kühlkanals (62) abgerundet ist, um den Luftströmungswiderstand zu verringern.

7. Anordnung nach Anspruch 6, dadurch gekennzeichnet, daß die Kühlkanäle (62) einen kreisrunden Querschnitt aufweisen und der Rand mit einem Radius abgerundet ist, der wenigstens gleich dem 0,04-fachen des Durchmessers des Kühlkanales ist.

8. Anordnung nach Anspruch 6, dadurch gekennzeichnet, daß die Kühlkanäle (62) einen kreisrunden Querschnitt aufweisen und daß der Rand mit einem Radius abgerundet ist, der größer als das 0,1-fache des Durchmessers des Kühlkanales ist.

9. Anordnung nach einem der Ansprüche 1 bis 8, dadurch gekennzeichnet, daß ein stromabseitiger Endabschnitt eines jeden Kühlkanals (62) eine größere Querschnittsfläche als der Rest des Kanals aufweist.

10. Anordnung nach Anspruch 9, dadurch gekennzeichnet, daß die Querschnittsfläche des stromabseitigen Endabschnitts in Strömungsrichtung zunimmt.

**Revendications**

1. Agencement de refroidissement pour un moule (50) d'une machine de formage d'articles de verrerie de type sectionnelle, cet agencement comprenant des moyens de soufflage d'air (33), une canalisation et/ou tuyauterie (34, 36, 44, 32) agencée de façon à conduire l'air soufflé par les moyens de soufflage d'air jusqu'à une chambre-collecteur (80, 90) de l'agencement, cette chambre-collecteur communiquant, lorsque le moule est fermé, avec des entrées de passages de refroidissement (62) de l'agencement ménagés dans au moins une partie du moule, chaque passage de refroidissement s'étendent sensiblement suivant une ligne droite entre son entrée et une sortie de ce passage vers l'atmosphère, agencement dans lequel les moyens de soufflage d'air (33) sont agencés de façon à créer une pression d'air comprise entre 1100 et 200 mm de colonne d'eau aux entrées des passages de refroidissement, et la canalisation et/ou tuyauterie (34, 36, 44 32) et la chambre-collecteur (80, 90) sont agencées de façon à fournir moins de résistance au passage de l'air à travers eux que la résistance cumulée des passages de refroidissement.

2. Agencement de refroidissement selon la revendication 1, caractérisé en ce que les moyens de soufflage d'air (33) sont agencés de façon à créer une pression d'air comprise entre 800 et 200 millimètres de colonne d'eau à l'endroit des entrées des passages de refroidissement (62).

3. Agencement de refroidissement selon l'une ou l'autre des revendications 1 et 2, caractérisé en ce que la canalisation et/ou tuyauterie (34, 36, 44, 32) et la chambre-collecteur (80, 90) sont agencées de façon à fournir moins de 30 pour cent de la résistance totale à l'écoulement d'air fournie entre les moyens de soufflage d'air (33) et les sorties des passages de refroidissement (62).

4. Agencement de refroidissement selon l'une quelconque des revendications 1 à 3, caractérisé en ce que la chambre-collecteur (80, 90) présente plusieurs sorties (66), chaque sortie étant agencée de façon à communiquer avec l'entrée de l'un des passages de refroidissement (62), chaque sortie étant sensiblement de la même forme que l'entrée avec laquelle elle communique, mais d'une surface plus grande en section transversale.

5. Agencement de refroidissement selon la revendication 4, caractérisé en ce que le bord amont de chaque sortie (66) présente un congé de façon à réduire la résistance à l'écoulement d'air.

6. Agencement de refroidissement selon l'une quelconque des revendications 1 à 5, caractérisé en ce que le bord de l'entrée de chaque passage de refroidissement (62) présente ainsi un congé de façon à réduire la résistance à l'écoulement d'air.

7. Agencement de refroidissement selon la revendication 6, caractérisé en ce que les passages de refroidissement (62) peuvent être circulaires en section en coupe transversale et le bord présente un congé d'un rayon qui est égal à au moins 0,04 fois le diamètre du passage de refroidissement.

8. Agencement de refroidissement selon la revendication 6, caractérisé en ce que les passages de refroidissement (62) sont circulaires en section en coupe transversale et le bord présente un congé d'un rayon qui est supérieur à 0,1 fois le diamètre du passage de refroidissement.

9. Agencement de refroidissement selon l'une quelconque des revendications 1 à 8, caractérisé en ce qu'une partie extrème aval de chaque passage de refroidissement (62) peut être d'une surface en section transversale plus grande que le reste du passage.

10. Agencement de refroidissement selon la revendication 9, caractérisé en ce que la partie extrème aval croit en surface en section transversale suivant la direction vers l'aval.

Fig_1

Fig. 2